# FASCICULE DE BREVET EUROPEEN

(11) **EP 2 162 305 B1**
(45) Date de publication et mention de la délivrance du brevet: **18.04.2012**
(21) Numéro de dépôt: 08760429.4
(22) Date de dépôt: 03.06.2008
(51) Int. Cl.: B60C 29/02, B60C 23/00

(54) **VANNE DE PURGE POUR ENSEMBLE MONTE**
SPÜLVENTIL FÜR MONTIERTE ANORDNUNG
PURGE VALVE FOR MOUNTED ASSEMBLY

(30) Priorité: 06.06.2007 FR 0704038
(43) Date de publication de la demande: 17.03.2010
(73) Titulaire: Société de Technologie MICHELIN, 63000 Clermont-Ferrand (FR); MICHELIN Recherche et Technique S.A., 1763 Granges-Paccot (CH)
(72) Inventeur: DURIF, Pierre, F-63530 Enval (FR)
(74) Mandataire: Le Cam, Stéphane Georges Elie
(86) Numéro de dépôt international: PCT/EP2008/056845
(87) Numéro de publication internationale: WO 2008/148757

(56) Documents cités:
- DE-A1- 3 926 391
- DE-C1- 3 725 406
- US-A- 4 046 163
- US-B1- 6 408 913

## Description

La présente invention concerne une vanne de purge pour un ensemble monté pour véhicule, constitué d'une roue comportant une jante et d'un pneumatique, ledit ensemble monté étant destiné à équiper un véhicule ou engin lourd de type génie civil,.

Bien que non limitée à ce type d'application, l'invention sera plus particulièrement décrite en référence à des pneumatiques pour véhicule de type dumper travaillant dans des mines et présentant une largeur axiale supérieure à 18 pouces.

Les réalisations usuelles des ensembles montés sont de deux types en ce qui concerne les jantes. Ils sont réalisés soit avec des jantes dites à base creuse, possédant des sièges tronconiques inclinés par rapport à l'axe de rotation de l'ensemble d'un angle de 5° ou de 15°, soit avec des jantes à fond plat ou pratiquement plat ayant des sièges inclinés soit à 0°, soit à 5° par rapport à l'axe de rotation.

Les jantes dites à base creuse comportent une gorge de montage dont le diamètre est nettement inférieur au diamètre nominal de la jante. Ce diamètre intérieur de la jante peut être considéré par les utilisateurs comme trop petit, car il ne permet pas de choisir par exemple des tambours de freins de dimensions adaptées à un freinage efficace des véhicules de plus en plus puissants par rapport à leurs poids.

De ce fait, ces jantes sont couramment employées pour les ensembles montés destinés à des véhicules de type Tourisme et/ou Poids-Lourds, mais le sont beaucoup moins et parfois pas du tout pour les autres types de véhicules, tels que, par exemple, les engins de chantier et Génie Civil.

Pour la réalisation d'ensemble monté, notamment de type "tubeless", une jante à fond plat nécessite la présence d'au moins un anneau latéral amovible, d'un anneau de verrouillage et d'un joint d'étanchéité, et évidemment du fond de jante muni d'un rebord fixe du côté opposé au côté où les pièces sont amovibles. En effet, les dimensions des roues des véhicules et celles des pneumatiques et notamment la raideur des zones basses nécessitent que lesdites roues soient réalisées en plusieurs parties pour permettre le montage du pneumatique sur une jante. Il faut donc au minimum trois pièces. Dans la majorité des cas, le nombre de pièces nécessaires est supérieur à trois et peut atteindre parfois six pièces pour les grosses dimensions de pneumatique, sans compter les pièces nécessaires à la fixation des roues sur le véhicule. Exception faite des joints d'étanchéité en caoutchouc, les pièces d'une jante sont métalliques, et en conséquence, lourdes, encombrantes, et difficiles à manutentionner. Il s'ensuit que les montage et démontage de pneumatiques de grande et très grande dimension constituent des opérations difficiles et longues. La mise en place et/ou l'enlèvement d'une roue équipée d'un tel pneumatique requièrent l'immobilisation du véhicule ou de l'engin pendant une durée non négligeable et donc nuisible à la productivité recherchée dans l'utilisation de ces véhicules.

La demande de brevet WO 00/71365 a décrit une technique permettant de simplifier le montage des pneumatiques, ceux-ci étant montés directement sur le moyeu, faisant alors office de jante. Des anneaux de montage indépendants jouent le rôle des sièges de jante et sont maintenus en place par des anneaux de blocage qui se solidarisent au moyeu du fait notamment de profils complémentaires. Selon cette technique, l'anneau de verrouillage est composé d'un mélange de caoutchouc vulcanisé renforcé par et enrobant un anneau de renforcement circonférentiellement élastique et radialement résistant à la compression.

Une telle technique est tout à fait intéressante puisqu'elle permet d'éliminer les phases de montage sur une jante ainsi que la fixation d'une roue sur le véhicule, les pneumatiques étant directement montés sur le moyeu par l'intermédiaire des anneaux de montage et anneaux de verrouillage. En outre, le nombre d'éléments étant fortement diminué les phases de manutention de ces éléments sont simplifiées.

Toutefois, que cette dernière technique soit mise en oeuvre ou que les pneumatiques soient associés à des roues constituées de plusieurs pièces, lorsqu'il est nécessaire de changer un pneumatique ou d'effectuer une permutation sur le véhicule de deux pneumatiques, une étape du démontage de la roue et/ou du pneumatique est toujours nécessaire ; il s'agit du dégonflage du pneumatique, indispensable pour un changement de pneumatique et quasi-indispensable au moins en partie pour une permutation des ensembles montés afin d'en diminuer le poids.

Le temps de dégonflage d'un pneumatique de dimension 59/80R63 équipant un véhicule de type dumper est supérieur à trente minutes, ce qui entraîne pour une permutation complète des pneumatiques des véhicules un temps cumulé de dégonflage d'au moins deux heures.

Sachant que dans une mine un cycle de travail correspondant au transport d'une benne pleine d'un véhicule de type dumper est le plus souvent inférieur à ce temps de trente minutes, il apparaît clairement que les temps d'intervention sur les pneumatiques ont une influence directe et conséquente sur la productivité des véhicules.

Il existe donc notamment le souhait de réduire le temps de dégonflage de tels pneumatiques.

Les pneumatiques pour engins de génie civil, tels que les véhicules utilisés dans les mines par exemple de type dumper, sont habituellement soumis à une pression comprise entre 4 et 10 bars pour des charges et dimensions usuelles.

Les techniques actuelles de dégonflage consistent libérer la partie interne de la valve de gonflage pour laisser s'échapper l'air. Diminuer le temps de dégonflage pourrait consister à augmenter la dimension des systèmes de valve de gonflage actuels mais leur conception deviendrait délicate et les débits occasionnés du fait des pressions et du volume d'air dans ce type de pneumatiques conduiraient à une mise en danger de l'opérateur qui doit libérer la partie interne de la valve.

Des valves existantes de type papillon, boisseau ou à clapet avec des dimensions adaptées ont été envisagées mais elles présentent différents inconvénients. D'une part, elles sont d'un encombrement trop important pour être mise en place sur certains véhicules et d'autre part, l'entretien de ces vannes nécessite un démontage complet. L'entretien doit être pris en compte car lorsque l'air s'échappe de l'ensemble monté, il entraîne avec lui des particules telles que des résidus de corrosion provenant de la roue, des fragments de pneumatique, dans les cas de détérioration de celui-ci, ainsi encore que des liquides provenant des résultats de condensation et des produits spécifiques destinés à lutter contre la corrosion. Le document D1 (DE3725406C1) décrit une vanne de purge pour un ensemble monté selon le préambule de la revendication 1.

Dans leurs études et notamment durant l'étude de la réalisation d'ensemble monté comportant des pneumatiques de grandes dimensions, notamment dont la largeur axiale est supérieure à 18 pouces, destinés à équiper des véhicules de type dumper dont on souhaite sans cesse augmenter la productivité, les inventeurs se sont ainsi donnés pour mission d'améliorer les temps nécessaires au dégonflage des pneumatiques.

Ce but a été atteint selon l'invention par une vanne de purge pour un ensemble monté, pour véhicule, constitué d'une roue comportant une jante et d'un pneumatique, ladite vanne comprenant un corps associé à la jante et un piston mobile par rapport au corps entre une position de fermeture et une position de purge, ladite vanne étant normalement fermée, l'ouverture de la vanne étant obtenue par le déplacement du piston dans l'espace radialement extérieur à la jante, ladite ouverture étant obtenue par action d'une force de commande sur le piston, exercée depuis l'espace radialement intérieur à la jante, et assurée au moins en partie par de l'air comprimé conduit depuis l'espace radialement intérieur à la jante jusqu'à la surface radialement intérieure du piston et l'air comprimé conduit depuis l'espace radialement intérieur à la jante jusqu'à la surface radialement intérieure du piston étant à une pression inférieure ou égale à celle de l'ensemble monté.

On entend par « axiale », une direction parallèle à l'axe de rotation de l'ensemble monté et par « radiale » une direction coupant l'axe de rotation de l'ensemble monté et perpendiculaire à celui-ci. L'axe de rotation de l'ensemble monté est l'axe autour duquel il tourne en utilisation normale.

Un plan circonférentiel ou plan circonférentiel de coupe est un plan perpendiculaire à l'axe de rotation de l'ensemble monté. Le plan équatorial ou plan médian circonférentiel est le plan circonférentiel passant par le centre ou sommet de la bande de roulement du pneumatique et qui divise le pneumatique et/ou l'ensemble monté en deux moitiés.

Un plan radial est un plan qui contient l'axe de rotation de l'ensemble monté.

La direction longitudinale du pneumatique, ou direction circonférentielle, est la direction correspondant à la périphérie du pneumatique et définie par la direction de roulement du pneumatique et/ou de l'ensemble monté.

Au sens de l'invention, l'ensemble monté englobe tout type d'ensemble pneumatique/roue, quel que soit le type de roue ou jante et notamment des ensembles montés tels que cité précédemment et décrit dans la demande de brevet WO 00/71365.

La valve de purge ainsi définie selon l'invention peut être dimensionnée pour permettre de diminuer le temps nécessaire pour dégonfler un pneumatique. En effet, s'agissant non plus d'adapter une valve classique de gonflage à des conditions spécifiques d'un dégonflage par une intervention correspondant au démontage d'une partie interne d'une valve, il a été possible de définir la valve selon l'invention qui peut être ouverte sans intervention directe d'un opérateur.

Un premier mode de réalisation prévoit que le rapport de la surface de commande sur la surface radialement extérieure du piston est supérieur ou égal à 110 %. La surface de commande, qui correspond au sens de l'invention à la surface du piston sur laquelle s'exerce la force de commande, étant supérieure à la surface radialement extérieure du piston, c'est-à-dire la surface du piston au contact de l'air de gonflage de l'ensemble monté, la pression de l'air comprimé qui vient exercer la force de commande peut être choisie inférieure ou égale à celle de la pression de gonflage de l'ensemble monté tout en permettant d'obtenir le déplacement du piston de la vanne de purge radialement vers l'extérieur et donc en obtenant l'ouverture de ladite vanne.

Un deuxième mode de réalisation prévoit encore que la force de commande est augmentée par un dispositif mécanique et/ou hydraulique et/ou électrique. Indépendamment du rapport de la surface de commande sur la surface radialement extérieure du piston, des dispositifs complémentaires avantageusement commandés par l'air comprimé appliquant la force de commande sur la surface de commande du piston peuvent selon ce deuxième mode de réalisation augmenter ladite force de commande. Il s'agit par exemple de systèmes mécaniques de type bras de levier. Des dispositifs électriques, tels que par exemple un électroaimant, peuvent également contribuer à la force de commande.

L'invention prévoit encore la combinaison des deux modes de réalisation évoqués ci-dessus.

Avantageusement encore selon l'invention, la valve de purge est fixée sur le fond de jante de sorte que l'air soit évacué dans l'espace axialement entre les roues du véhicule. Selon une telle réalisation, l'air est évacué dans une zone relativement close par le dessous du camion, le sol et les parties pleines des roues. Dans le cas de roues jumelées, par exemple sur l'essieu arrière d'un véhicule, l'air peut ainsi être évacué depuis chacun des ensembles montés dans l'espace entre les roues jumelées.

Selon les modes de réalisation de l'invention évoqués ci-dessus, l'air comprimé, qui vient exercer la force de commande conduisant à l'ouverture de la vanne de purge, peut être amené par un conduit, tel qu'un tube rigide, solidaire de la ou des roues dont une extrémité est fixée à la partie radialement intérieure de la vanne de purge pour amener ledit air comprimé jusqu'à la surface radialement intérieure du piston et dont l'autre extrémité est accessible à un opérateur pour raccorder un compresseur. Cette autre extrémité, accessible par un opérateur, est avantageusement située dans l'espace axialement extérieur aux roues, c'est-à-dire avantageusement en dehors des zones où l'air sera évacué de façon à limiter les risques liés au dégonflage pour l'opérateur.

Une variante avantageuse de l'invention prévoit que, dans sa position ouverte, la vanne crée une section d'évacuation annulaire au sein l'espace radialement extérieur à la jante dans la cavité du pneumatique. Selon cette variante de l'invention, pour une section globale d'évacuation de l'air donnée, la largeur de l'ouverture est limitée et permet ainsi d'éviter le passage de débris contenu dans l'ensemble monté et de dimensions supérieures à cette largeur de l'ouverture. Cette variante de réalisation de l'invention accentue encore l'aspect sécuritaire du dégonflage en éliminant les particules de gros diamètre pouvant être entraînées pendant un dégonflage. Cela permet par ailleurs un moindre encrassement de la valve de purge.

Selon un premier mode de réalisation de l'invention, la vanne de purge libère l'air dans l'espace radialement intérieur à la jante par un orifice.

De préférence, l'orifice présente au moins une dimension caractéristique inférieure à 10 mm. Par dimension caractéristique d'un orifice, on entend au sens de l'invention une dimension qui caractérise l'orifice, par exemple le diamètre pour un orifice de section circulaire, ou par exemple la longueur, largeur ou hauteur pour un orifice de section différente.

Selon d'autres modes de réalisation de l'invention, la vanne de purge libère l'air dans l'espace radialement intérieur à la jante par au moins deux orifices. La multiplication du nombre d'orifices de sorties de l'air peut encore permettre de filtrer les éventuels débris entraînés lors du dégonflage, le diamètre des orifices pouvant diminuer avec l'augmentation de leur nombre. La multiplication des orifices peut également contribuer à diminuer le bruit.

La section totale du ou des orifices est avantageusement est au moins égale à la section formée par l'ouverture du piston au sein de la cavité de l'ensemble monté pour diminuer au maximum les pertes de charge durant l'écoulement de l'air au travers de la vanne de purge.

Selon un mode de réalisation avantageux de l'invention, la vanne de purge comporte un système de contrôle pour déplacer le piston en position de purge dès que la pression du pneumatique dépasse une pression seuil.

Un tel mode de réalisation de l'invention consiste à prévoir un système de contrôle qui va déclencher l'ouverture de la vanne de purge au-delà d'une pression seuil prédéterminée.

Selon une première variante de ce mode de réalisation de l'invention, la vanne de purge comportant un moyen compressible assurant la position normalement fermée, ladite vanne de purge comporte un système de contrôle de type passif et la pression du pneumatique maintient la vanne ouverte jusqu'à une pression définie par le moyen compressible.

Selon une deuxième variante de ce mode de réalisation de l'invention, ladite vanne de purge comporte un système de contrôle de type actif et la pression du pneumatique maintient la vanne ouverte par l'intermédiaire d'une commande d'un opérateur.

Dans le cas de la première variante consistant en un système de contrôle passif, les inventeurs proposent d'utiliser la pression du pneumatique pour agir directement sur la vanne de purge et provoquer son ouverture.

Les inventeurs proposent par exemple un dispositif tel que, par exemple, une valve diaphragme calibrée pour se rompre au seuil de pression prédéfini et ouvrir un passage pour l'air depuis la cavité de l'ensemble monté vers la partie radialement intérieur du piston de la vanne de purge au travers d'un conduit tel qu'un tuyau rigide. Un tel dispositif est avantageusement associé à un clapet anti-retour pour éviter une pression non souhaitée qui viendrait s'exercer par exemple sur la valve diaphragme lorsque la vanne de purge est ouverte sous l'effet d'une pression de commande d'un opérateur.

Dans le cas de la deuxième variante consistant en un système de contrôle actif, les inventeurs proposent également d'utiliser la pression du pneumatique pour agir directement sur la vanne de purge et provoquer son ouverture mais cette fois-ci à l'aide d'un dispositif commandé par l'opérateur, ledit dispositif étant par exemple prévu sur un conduit reliant la cavité de l'ensemble monté à la vanne de purge. Le fonctionnement de la vanne de purge et plus particulièrement son ouverture est alors semblable au cas du système de contrôle passif.

Selon une autre variante de ce mode de réalisation de l'invention, selon lequel la vanne de purge comporte un système de contrôle pour déplacer le piston en position de purge dès que la pression du pneumatique dépasse une pression seuil, ladite vanne de purge combine un système de contrôle de type actif et un système de contrôle de type passif. Il est alors possible de maîtriser la pression du pneumatique soit par une action volontaire lorsque par exemple l'opérateur est conscient du dépassement et/ou de l'approche d'une valeur de pression seuil soit par une action automatique déclenchée par un système de type passif.

Dans le cas des systèmes de contrôle actif et/ou passif utilisant la pression de l'ensemble monté, la conception de la vanne de purge est alors nécessairement prévue comme énoncé précédemment pour permettre son ouverture par l'action d'une pression d'air égale à la pression de gonflage de l'ensemble monté sur la surface radialement intérieure du piston qui vient s'opposer à la somme de l'action de la même pression sur la surface radialement externe du piston et de l'action dudit moyen compressible. La vanne de purge présente alors une surface de commande du piston supérieure d'au moins 10 % à la surface radialement extérieure du piston au contact de l'air enfermé dans la cavité de l'ensemble monté de sorte que la vanne de purge soit en position ouverte jusqu'à une pression prédéterminée par la différence desdites sections et la raideur du moyen compressible et/ou la force de commande est augmentée par une action mécanique et/ou hydraulique supplémentaire à l'action de l'air comme force agissant sur la surface radialement intérieure du piston pour provoquer son déplacement.

La vanne de purge ainsi réalisée selon l'invention autorise un dégonflage plus rapide, son diamètre et son débit pouvant être adaptés au besoin défini par le volume de l'ensemble monté et sa pression de gonflage, sans aucun risque pour l'opérateur.

En outre, elle autorise également l'adjonction de systèmes de contrôle actif et/ou passif qui vont permettre d'éviter tous risque de roulages avec des pressions trop élevées et encore limiter les temps d'attentes qui existent actuellement lorsque des pressions trop élevées apparaissent notamment pour limiter les risques pouvant conduire à un endommagement des pneumatiques.

La vanne de purge selon l'invention peut encore soit être prévue initialement lors de la conception ou fabrication d'une nouvelle roue ; il suffit de prévoir un perçage de ladite roue à la dimension requise, la vanne venant se loger dans ledit orifice. La fixation de celle-ci peut se faire par vissage du corps de la vanne de purge dans l'épaisseur de la tôle constituant la roue, par serrage sur la roue de deux éléments de la vanne de purge par exemple vissés l'un à l'autre et qui viennent pincer ladite roue. La simplicité du montage permet également d'adapter la vanne selon l'invention à des roues existantes, un simple perçage supplémentaire de la roue étant nécessaire.

Dans le cas de la conception ou fabrication d'une nouvelle roue, le corps de la vanne de purge peut encore être soudé à la roue et faire ainsi partie intégrante de la roue et participer à sa résistance mécanique globale.

Le piston est fixé au mécanisme interne de la vanne, l'ensemble étant avantageusement fixé par vissage au corps de vanne. Le piston étant mobile vers la partie radialement extérieure à la vanne, il devient accessible dès lors que le pneumatique n'est pas ou plus en place. La vanne de purge peut ainsi aisément être démonté pour son entretien par exemple par des dispositifs tels que des trous pour clés à ergots, une fente pour tournevis, ... ; il est en effet notamment important de pouvoir la nettoyer régulièrement, ladite vanne de purge selon l'invention étant susceptible de retenir des particules pour éviter leur projection en dehors de la cavité de l'ensemble monté.

L'invention propose encore un procédé de dégonflage d'un ensemble monté constitué d'une roue comportant une jante et d'un pneumatique pour véhicule, par une vanne de purge, comprenant un corps associé à la jante et un piston mobile par rapport au corps entre une position de fermeture et une position de purge, ladite vanne étant normalement fermée, la vanne étant ouverte par une action d'une force de commande exercée depuis l'espace radialement intérieur à la jante.

D'autres détails et caractéristiques avantageux de l'invention ressortiront ci-après de la description d'exemples de réalisation de l'invention en référence aux figures 1 à 4 qui représentent :
- figure 1a, 1b une représentation schématique d'une valve de purge selon un premier mode de réalisation de l'invention fixée sur une jante,
- figure 2a, 2b une représentation schématique d'une valve de purge selon un deuxième mode de réalisation de l'invention fixée sur une jante,
- figure 3a, 3b une représentation schématique d'une valve de purge selon un troisième mode de réalisation de l'invention fixée sur une jante,
- figure 4, une représentation schématique de valves de purge selon l'invention fixées sur des ensembles montés jumelés.

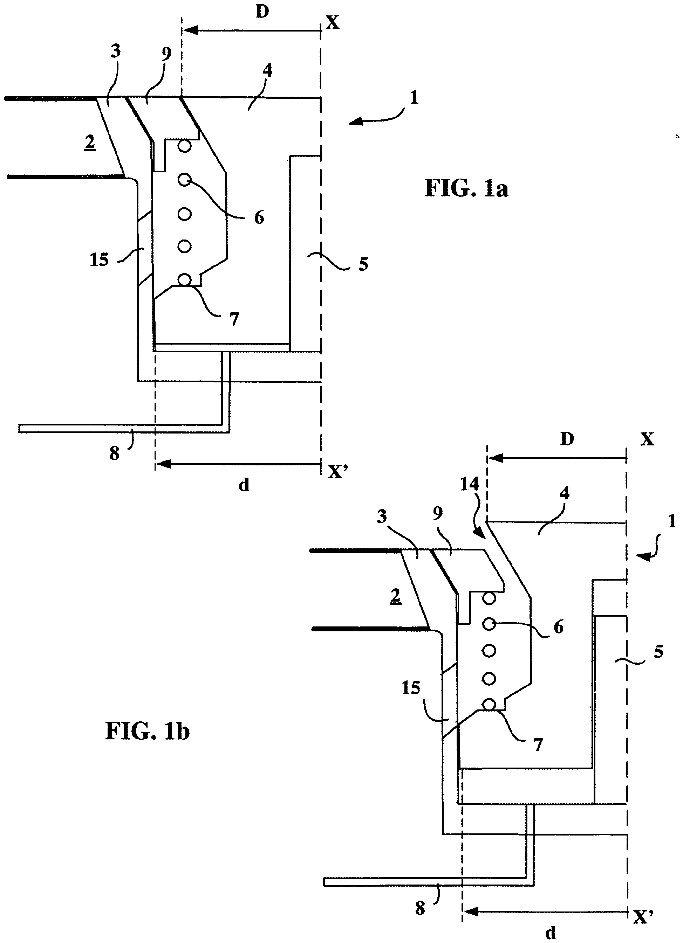

Les figures ne sont pas représentées à l'échelle pour en simplifier la compréhension. Les figures 1 à 3 ne représentent qu'une demi-vue d'une valve de purge qui se prolonge de manière symétrique par rapport à l'axe XX'.

Les Figures 1a et 1b représentent un schéma vu selon une coupe radiale d'une valve de purge 1 réalisé conformément à l'invention et fixée dans une jante 2 d'une roue d'un ensemble monté. La vanne de purge 1, de section sensiblement circulaire dans cet exemple, est notamment constituée d'un corps de vanne 3 rendu solidaire de la jante 2, par exemple par vissage dans un trou prévu dans la jante, et d'un piston 4 lui-même associé au corps de vanne 3, par exemple par vissage par l'intermédiaire d'une pièce mécanique supplémentaire 5 interne au corps de vanne pour assurer le fonctionnement de ladite vanne.

Dans le cas de ces figures 1a et 1b, la conception de la vanne de purge 1 est telle que la surface radialement extérieure du piston 4 est inférieure à la surface radialement intérieure du piston 4; Le diamètre d de la surface de commande est dans le cas de la figure 1 plus grand que le diamètre D de la surface radialement extérieure du piston 4 qui, elle, est au contact de la pression de l'air de gonflage de l'ensemble monté.

Dans les représentations des figures la et 1b, la vanne de purge 1 comporte un élément supplémentaire 9 qui permet de réduire la section radialement externe du piston 4, Cet élément supplémentaire 9 est avantageusement fixé par vissage sur le corps de vanne 3. Lors du déplacement du piston 4 celui-ci libère un passage au niveau de cet élément supplémentaire 9, tout en restant au contact du corps de Vanne 3 dans sa partie radialement intérieure.

Les différents éléments constitutifs de la vanne de purge peuvent être réalisés en tous matériaux permettant d'obtenir une précision dimensionnelle et une rigidité suffisantes; il peut s'agir d'acier inoxydable, de matériaux injectés, ...

Sur les figures 1a, 1b et sur les figures qui suivant, ne sont pas représentés, par soucis de simplification les joints d'étanchéité nécessaire entre les éléments fixés entre eux et entre les éléments mobiles les uns par rapport aux autres. L'invention requiert une étanchéité importante qui peut être obtenue selon les connaissances de l'homme du métier par la présence de joints toriques ou joint élastique métallique entre les liaisons roue/corps de vanne et/ou corps de vanne/piston ou encore de profil de pente du piston autorisant un contact métal/métal.

Ne sont également pas représentées sur les figures les éléments de fixation telles que les zones de filetage ainsi que les zones permettant agir par l'effet d'un couple sur les différents éléments constitutifs de la vanne de purge pour les dissocier les uns des autres. N'est notamment pas représenté sur la figure 1 le moyen de couplage mécanique qui peut exister entre le piston 4 et la pièce 5 qui va permettre en agissant sur le piston 4, depuis la zone radialement extérieure de la jante, de dissocier l'élément 5 du corps de vanne 3 par exemple en tournant le piston 4 pour dévisser l'ensemble piston 4 plus élément 5.

La vanne de purge 1 selon l'invention peut comme énoncé précédemment être fixé sur une jante (ou roue) nouvellement conçue et/ou fabriquée dans laquelle un trou est prévue ou bien sur une jante (ou roue) existante dans laquelle un trou adaptée à la taille de la vanne de purge nécessaire à l'ensemble monté.

La vanne de purge 1 comporte encore un ressort 6 comprimé entre d'une part un appui sur la pièce 5 et une partie 7 du piston 4. La compression et la raideur du ressort sont prédéfinies pour que la vanne de purge 1 soit de type normalement fermée comme représentée sur la figure 1a, la figure 1b illustrant la vanne de purge 1 dans un état ouvert.

Sur les figure 1a et 1b est encore représenté le conduit 8 qui permet d'amener l'air comprimé qui va permettre le déplacement du piston 4 vers la zone radialement extérieure à la roue et donc l'ouverture de la vanne de purge 1. L'air comprimé amené par le conduit 8 vient au contact de la surface radialement interne du piston 4, considérée comme la surface de commande. Le diamètre d de cette surface de commande est dans le cas de la figure 1 plus grand que le diamètre D de la surface radialement extérieure du piston 4 qui elle est au contact de la pression de l'air de gonflage de l'ensemble monté. La pression de l'air comprimé conduit jusqu'à la surface de commande du piston doit donc être suffisante pour permettre le déplacement du piston 4 et peut être inférieure à la pression de gonflage de l'ensemble monté, le choix du ressort 6, et notamment sa raideur, étant adapté. La pression de l'air comprimé qui s'applique sur la surface radialement interne du piston 4 doit en effet compenser la combinaison de la force exercée par l'air de gonflage sur la surface radialement externe du piston 4 et la force exercée par le ressort 6.

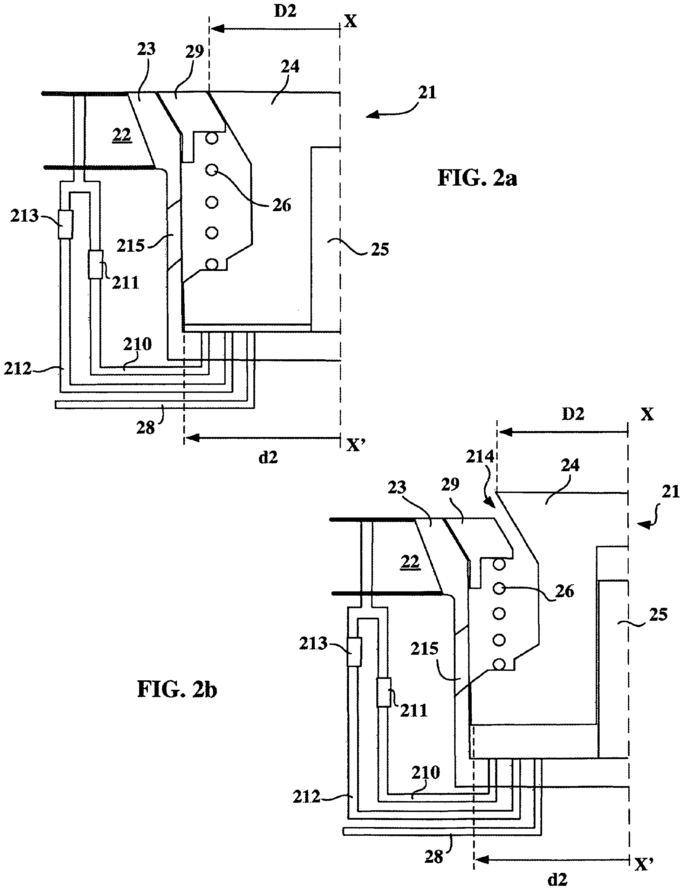

Les figures 2a, 2b illustrent une vanne de purge 21, semblable à celle des figures 1a et 1b à laquelle sont ajoutés des systèmes de contrôle passif et/ou actif qui entraînent l'ouverture de la vanne de purge dès lors qu'une pression seuil prédéfinie est atteinte dans l'ensemble monté. Il est possible de voir apparaître une élévation de pression dans l'ensemble monté due notamment à une élévation de la température de l'air de gonflage par exemple du fait du pneu ou des systèmes de freinage. Il est préférable d'éviter ce type d'élévation de la pression notamment pour préserver l'intégrité du pneumatique.

Dans le cas de ces figures 2a et 2b, la conception de la vanne de purge 21 est telle que la surface radialement extérieure du piston 24 est inférieure à la surface radialement intérieure du piston 21 ; Le diamètre d2 de la surface de commande est, comme dans le cas de la figure 1, plus grand que le diamètre D2 de la surface radialement extérieure du piston 24 qui elle est au contact de la pression de l'air de gonflage de l'ensemble monté. En outre, les dimensions et la raideur du ressort sont choisies pour que l'action d'une pression supérieure à la pression seuil prédéfinie agissant à la fois sur la surface radialement extérieure et la surface radialement intérieure du piston 24 entraîne l'ouverture de la vanne de purge 21 par un déplacement du piston 24 vers la zone radialement extérieure à la jante 22.

Dans les représentations des figures 2a et 2b, comme dans le cas des figures 1a et 1b, la vanne de purge 21 comporte un élément supplémentaire 29 qui permet de réduire la section radialement externe du piston 24. Cet élément supplémentaire 29 est avantageusement fixé par vissage sur le corps de vanne 23. Lors du déplacement du piston 24 celui-ci libère un passage au niveau de cet élément supplémentaire 29, tout en restant au contact du corps de vanne 23 dans sa partie radialement intérieure.

La vanne de purge 21 est encore associée à un conduit supplémentaire 210 qui relie par la surface radialement intérieure du piston 21 à la cavité intérieure formée par l'ensemble montée. Ce conduit 210 comporte un dispositif 211 obturant le passage de l'air et capable de s'ouvrir dès lors que la pression seuil prédéterminée est atteinte ; un tel élément est par exemple une valve diaphragme calibrée pour se rompre au seuil de pression prédéfini. Le dispositif ainsi décrit constitue un système de contrôle passif qui permet de limiter les risques liés à des élévations de pression de l'ensemble monté.

Dans le cas des figures 2a et 2b, le choix des diamètres D2 et d2 et de la dimension et de la raideur du ressort vont permettre de définir la pression finale de l'ensemble monté dès lors que la pression seuil est atteinte. Un choix est par exemple d'aboutir à une pression de deux bars qui va permettre un retour du véhicule non chargé et à vitesse lente vers un atelier soit pour réparation soit pour remettre à neuf ce dispositif de contrôle passif, par exemple en remplaçant la valve diaphragme.

La vanne de purge 21 comporte également un autre conduit supplémentaire 212 qui relie par la surface radialement intérieure du piston 24 à la cavité intérieure formée par l'ensemble montée. Ce conduit 212 est associée à une commande 213 pilotée par un opérateur depuis la cabine du véhicule ou bien situé à côté du véhicule, ladite commande opérant une ouverture du conduit 212 et donc à l'ouverture de 1 vanne de purge 21 et donc au dégonflage de l'ensemble monté. Ce mode de dégonflage maîtrisé puisque l'opérateur le déclenche et l'arrête comme il le souhaite constitue un système de contrôle actif.

Sur les figures 2a, 2b, les conduits 210 et 212 sont reliés en un seul pour simplifier l'installation sur la roue avec un seul perçage. Selon d'autres variantes de réalisation, les conduits peuvent rester distincts et la roue comporte alors un perçage supplémentaire.

De la même façon, selon d'autres variantes de réalisation non représentées sur les figures, les conduits 210 et 212 peuvent être réunis en un seul pour simplifier la connexion à la vanne de purge.

Selon d'autres variantes de réalisation, les dispositifs 211 et 213 peuvent être intégrés dans le corps de vanne 23 ; cette variante de réalisation permet une installation simplifiée notamment dans le cas de l'installation de la vanne de purge 21 dans une roue existante.

Les conduits 210 et 212 comportent avantageusement des clapets anti-retour ou des dispositifs équivalents pour éviter le passage de l'air conduit par le conduit 28. De la même façon, le conduit 28 peut comporter un clapet anti-retour pour éviter le passage de l'air conduit par les conduits 210 et 212.

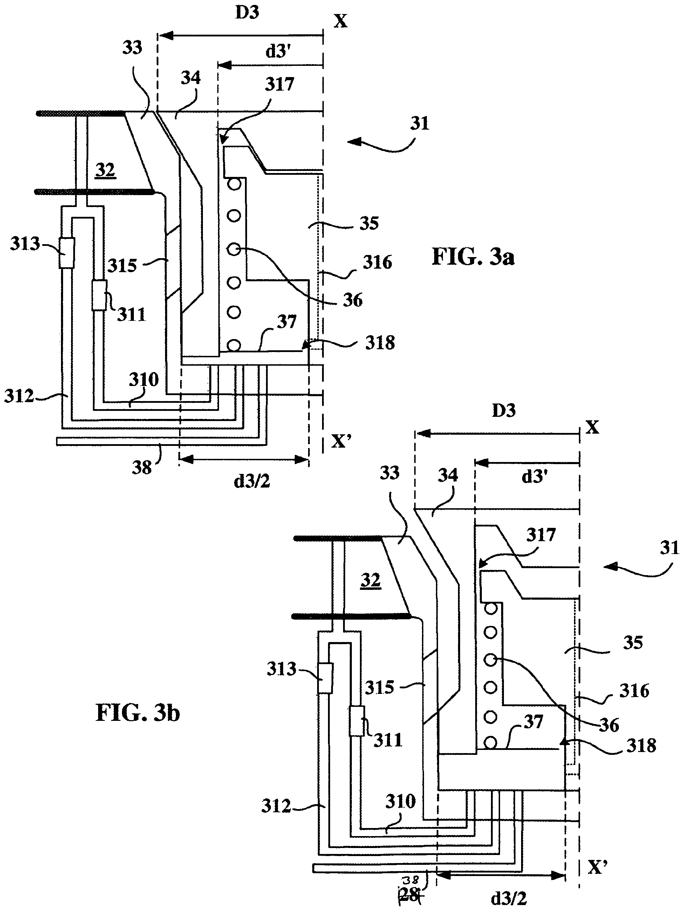

Les figures 3a, 3b illustrent également une vanne de purge 31 qui permet l'ajout de systèmes de contrôle passif et/ou actif.

Dans le cas de ces figures 3a et 3b, la conception de la vanne de purge 31 est telle que la surface radialement extérieure du piston 34 est inférieure à la surface de commande du piston 34. La représentation faite sur les figures 3a, 3b consiste à augmenter la surface de commande du piston 31 en cumulant deux surfaces identifiées par les dimensions d3 et d'3 ; pour cela, l'air de commande qui arrive dans une zone de la vanne 31 correspondant à la surface de commande identifiée par la dimension d3 est également conduit par un canal 316, prévu dans l'élément 35 solidaire du corps de vanne 33, jusqu'à une zone correspondant à la surface de commande identifiée par la dimension d3'. L'action cumulée de ces deux surfaces de commande est en outre notamment assurée par un moyen d'étanchéité au niveau des zones de flottement 317 et 318 respectivement entre le piston 34 et l'élément 35 et entre les éléments 37 et 35. La dimension globale (d3+d3') de la surface de commande globale est ainsi dans le cas de la figure 3 plus grande que la dimension D3 de la surface radialement extérieure du piston 34 qui elle est au contact de la pression de l'air de gonflage de l'ensemble monté. En outre, comme dans le cas de la figure 2, les dimensions et la raideur du ressort sont choisies pour que l'action d'une pression supérieure à la pression seuil prédéfinie agissant à la fois sur la surface radialement extérieure et la surface de commande du piston 34 entraîne l'ouverture de la vanne de purge 31 par un déplacement du piston 34 vers la zone radialement extérieure à la jante 32.

Comme dans le cas des figures 2a, 2b, la vanne de purge peut comporter des dispositifs de contrôle actif (312, 313) et/ou passif (310, 311).

L'ouverture de la vanne de purge 1, 21, 31, que ce soit dans le cas des figures 1b, 2b ou 3b, conduit à la création d'un orifice annulaire 14, 214 au sein de la cavité de l'ensemble monté enfermant l'air de gonflage. Cet orifice annulaire est prévu pour offrir une surface de sortie à l'air suffisamment importante pour diminuer considérablement les temps de dégonflage par rapport aux solutions actuelles tout en limitant localement la dimension de l'orifice pour limiter le passage de particules solides contenues dans l'ensemble monté et qui pourraient constituées des projectiles emportées par le courant d'air de dégonflage.

Les écoulements à l'intérieur de la vanne de purge sont avantageusement optimisés par un raccordement progressif en extrémité basse du piston et une position affleurante avec les orifices d'évacuation, 15, 215, 315, comme le montrent les figures, pour limiter les pertes de charge de l'air évacué et éviter les formations de turbulences.

L'air conduit par cet orifice annulaire est ensuite évacué par un ou plusieurs orifices 15, 215, 315 de sections limitées pour filtrer encore des particules solides en suspension.

La multiplication de ces orifices 15, 215 sur la périphérie de la vanne de purge 1, 21 permet la réduction de leurs sections sans limiter le débit d'air total évacué.

En outre, la multiplication de ces jets peut permettre de limiter le volume sonore engendré par la libération de l'air sous pression. Il est aussi possible d'associer des dispositifs de type silencieux autour de la vanne de purge 1, 21 pour limiter encore le bruit.

L'invention peut encore présenter des variantes de réalisation, non représentées sur les figures, permettant de diminuer le bruit lors de l'évacuation de l'air ; par exemple, le ou les orifices de sorties peuvent être conçus pour former une couche primaire d'air représentant au moins 60% du débit, entourée par des petits jets venant impacter la couche primaire et/ou aménageant une couche basse vitesse autour de la couche primaire.

Quel que soit le mode de réalisation de la vanne de purge, dans sa position fermée, elle ne présente avantageusement aucun élément en relief par rapport à la surface de la jante dans laquelle est fixée dans sa partie radialement extérieure ; En d'autres termes elle ne vient pas en débord par rapport à la surface radialement extérieure de la jante. Une telle configuration permet de ne pas gêner le passage des bourrelets de pneumatiques ou bien d'un anneau constitutif de la roue lors des montages ou démontage des ensembles montés.

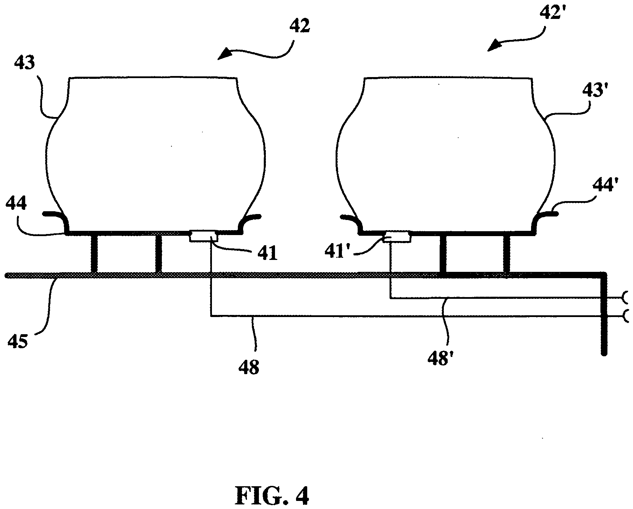

La figure 4 illustre l'association de deux ensembles montés jumelés 42, 42' constitués de pneumatiques 43, 43' et de roues 44, 44', comportant chacun des vannes de purges 41, 41'. Les ensembles montés sont fixés sur un essieu 45. Les vannes de purge 41, 41' sont avantageusement disposées dans l'espace compris entre les ensembles montés de sorte que lors de l'évacuation de l'air, celui-ci soit projeté dans cet espace et donc à distance d'un opérateur.

Cette figure 4 ne représente que des conduits 48, 48' permettant à un opérateur de connecter un compresseur avec de l'air à une pression permettant l'ouverture des vannes de purges 41, 41'.

Des essais de dégonflage ont été réalisés sur des ensembles montés comportant des pneumatiques de dimensions 59/80R63 et 44/80R57. Les essais ont été réalisés sur des ensembles montés comportant une vanne de purge selon l'invention.

D'autres essais ont été réalisés sur ces mêmes ensembles montés en effectuant un dégonflage de manière usuelle à partir de la vanne de gonflage.

Les résultas obtenus sont présentés dans le tableau suivant :

| | 59/80R63 | 44/80R57 |
|---|---|---|
| Dégonflage par vanne de purge selon l'invention | 3.20 mn | 2 mn |
| Dégonflage par valve de gonflage | 42 mn | 28 mn |

Ces résultats montrent outre les avantages en termes de simplicité et de sécurité que les temps de dégonflages obtenus selon l'invention sont très en dessous des temps usuels et peuvent conduire à des gains notables en termes de productivité des véhicules.

La vanne de purge selon l'invention est particulièrement intéressante pour des ensembles montés de grande dimension pour des applications de type génie civil. La vanne peut encore être utilisé pour tout type d'ensemble monté tel que des ensembles montés pour véhicule poids lourds, notamment ceux destinés à équiper des véhicules en monte simple en substitution d'ensembles montés jumelés, des ensembles montés pour véhicules de type agricole notamment ceux de grandes dimensions gonflés à basse pression, ...

## Revendications

1. - Vanne de purge (1, 21, 31) pour un ensemble monté pour véhicule constitué d'une roue comportant une jante (2, 22, 32) et d'un pneumatique, ladite vanne comprenant un corps (3, 23, 33) associé à la jante et un piston mobile (4, 24, 34) par rapport au corps entre une position de fermeture et une position de purge et ladite vanne étant normalement fermée, l'ouverture de la vanne étant obtenue par action d'une force de commande sur le piston, exercée depuis l'espace radialement intérieur à la jante, et assurée au moins en partie par de l'air comprimé conduit depuis l'espace radialement intérieur à la jante jusqu'à la surface radialement intérieure du piston, où l'ouverture de la vanne (1, 21, 31) est obtenue par le déplacement du piston (4, 24, 34) dans l'espace radialement extérieur à la jante (2, 22, 32) **caractérisée en ce que** l'air comprimé conduit depuis l'espace radialement intérieur à la jante (2, 22, 32) jusqu'à la surface radialement intérieure du piston (4, 24, 34) est à une pression inférieure ou égale à celle de l'ensemble monté.

2. - Vanne de purge (1, 21, 31) selon la revendication 1, **caractérisée en ce que** le rapport de la surface de commande sur la surface radialement extérieure du piston (4, 24, 34) est supérieur ou égal à 110%.

3. - Vanne de purge (1, 21, 31) selon l'une des revendications 1 ou 2, **caractérisée en ce que** la force de commande est augmentée par un dispositif mécanique et/ou hydraulique et/ou électrique.

4. - Vanne de purge (1, 21) selon l'une des revendications précédentes, **caractérisée en ce que**, dans sa position ouverte, la vanne (1, 21) crée une section d'évacuation annulaire (14, 214) au sein l'espace radialement extérieur à la jante (2, 22) dans la cavité du pneumatique.

5. - Vanne de purge (1, 21, 31) selon l'une des revendications précédentes, **caractérisée en ce qu**'elle libère l'air dans l'espace radialement intérieur à la jante (2, 22, 32) par au moins un orifice (15, 215, 315).

6. - Vanne de purge (1, 21, 31) selon la revendication 5, **caractérisée en ce que** l'orifice (15, 215, 315) présente au moins une dimension caractéristique inférieure à 10 mm.

7. - Vanne de purge (21, 31) selon l'une des revendications précédentes, **caractérisée en ce qu**'elle comporte un système de contrôle (210, 211, 212, 213; 310, 311, 312, 313) pour déplacer le piston (24, 34) en position de purge dès que la pression du pneumatique dépasse une pression seuil.

8. - Vanne de purge (21, 31) selon la revendication 7, comportant un moyen compressible (26, 36) assurant la position normalement fermée, **caractérisée en ce qu**'elle comporte un système de contrôle de type passif (210, 211; 310, 311) et en ce que la pression du pneumatique maintient la vanne (21, 31) ouverte jusqu'à une pression définie par le moyen compressible (26, 36).

9. - Vanne de purge (21, 31) selon la revendication 7 ou 8, **caractérisée en ce qu**'elle comporte un système de contrôle de type actif (212, 213; 312, 313) et en ce que la pression du pneumatique maintient la vanne (21, 31) ouverte par l'intermédiaire d'une commande d'un opérateur.

10. - Vanne de purge (1, 21, 31) selon l'une des revendications précédentes pour un ensemble monté pour un véhicule de type dumper.

11. . - Procédé de dégonflage d'un ensemble monté constitué d'une roue comportant une jante (2, 22, 32) et d'un pneumatique pour véhicule, par une vanne de purge (1, 21, 31), comprenant un corps (3, 23, 33) associé à la jante et un piston (4, 24, 34) mobile par rapport au corps entre une position de fermeture et une position de purge, ladite vanne étant normalement fermée, la vanne étant ouverte par action d'une force de commande, exercée depuis l'espace radialement intérieur à la jante, et assurée au moins en partie par de l'air comprimé conduit depuis l'espace radialement intérieur à la jante jusqu'à la surface radialement intérieure du piston, **caractérisé en ce que** l'air comprimé conduit depuis l'espace radialement intérieur à la jante (2, 22, 32) jusqu'à la surface radialement intérieure du piston (4, 24, 34) est à une pression inférieure ou égale à celle de l'ensemble monté.

## Claims

1. - Purge valve (1, 21, 31) for a mounted assembly for a vehicle consisting of a wheel comprising a rim (2, 22, 32) and of a tyre, the said valve comprising a body (3, 23, 33) associated with the rim and a piston (4, 24, 34) able to move with respect to the body between a closed position and a purge position and the said valve being normally closed, the opening of the valve being obtained by action of a control force on the piston, exerted from the space radially internal to the rim, and provided at least in part by compressed air led from the space radially internal to the rim to the radially interior surface of the piston where the opening of the valve (1, 21, 31) is obtained by the moving of the piston (4, 24, 34) into the space radially external to the rim (2, 22, 32), **characterized in that** the compressed air led from the space radially internal to the rim (2, 22, 32) to the radially interior surface of the piston (4, 24, 34) is at a pressure lower than or equal to that of the mounted assembly.

2. - Purge valve (1, 21, 31) according to Claim 1, **characterized in that** the ratio of the area of the control surface to the area of the radially exterior surface of the piston (4, 24, 34) is greater than or equal to 110%.

3. - Purge valve (1, 21, 31) according to one of Claims 1 and 2, **characterized in that** the control force is increased by a mechanical and/or hydraulic and/or electrical device.

4. - Purge valve (1, 21) according to one of the preceding claims, **characterized in that**, in its open position, the valve (1, 21) creates an annular discharge section (14, 214) within the space radially external to the rim (2, 22) in the tyre cavity.

5. - Purge valve (1, 21, 31) according to one of the preceding claims, **characterized in that** it releases the air into the space radially internal to the rim (2, 22, 32) through at least one orifice (15, 215, 315).

6. - Purge valve (1, 21, 31) according to Claim 5, **characterized in that** the orifice (15, 215, 315) has at least one characteristic dimension shorter than 10 mm.

7. - Purge valve (21, 31) according to one of the preceding claims, **characterized in that** it comprises a control system (210, 211, 212, 213, 310, 311, 312, 313) for moving the piston (24, 34) into the purge position as soon as the tyre pressure exceeds a threshold pressure.

8. - Purge valve (21, 31) according to Claim 7, comprising a compressible means (26, 36) ensuring the normally-closed position, **characterized in that** it comprises a control system of the passive type (210, 211; 310, 311) and **in that** the tyre pressure keeps the valve (21, 31) open until a pressure defined by the compressible means (26, 36) is reached.

9. - Purge valve (21, 31) according to Claim 7 or 8, **characterized in that** it comprises a control system of the active type (212, 213; 312, 313), and **in that** the tyre pressure keeps the valve (21, 31) open via an operator control.

10. - Purge valve (1, 21, 31) according to one of the preceding claims for a mounted assembly for a vehicle of the dumper type.

11. - Method of deflating a mounted assembly consisting of a wheel comprising a rim (2, 22, 32) and of a tyre, for a vehicle, using a purge valve (1, 21, 31) comprising a body (3, 23, 33) associated with the rim and a piston (4, 24, 34) able to move with respect to the body between a closed position and a purge position, the said valve being normally closed, the valve being opened by the action of a control force, exerted from the space radially internal to the rim, and provided at least in part by compressed air led from the space radially internal to the rim to the radially interior surface of the piston, **characterized in that** the compressed air led from the space radially internal to the rim (2, 22, 32) to the radially interior surface of the piston (4, 24, 34) is at a pressure lower than or equal to that of the mounted assembly.

## Patentansprüche

1. Entleerungsschieber (1, 21, 31) für eine montierte Kraftfahrzeuganordnung, die aus einem Rad, das eine Felge (2, 22, 32) umfasst, und aus einem Luftreifen gebildet ist, wobei der Schieber einen der Felge zugeordnete Körper (3, 23, 33) und einen in Bezug auf den Körper zwischen einer geschlossenen Position und einer Entleerungsposition beweglichen Kolben (4, 24, 34) umfasst, wobei der Schieber normalerweise geschlossen ist, wobei das Öffnen des Schiebers durch die Wirkung einer Steuerkraft auf den Kolben erhalten wird, die von dem radial inneren Raum der Felge ausgeübt wird und wenigstens teilweise durch die verdichtete Luft sichergestellt ist, die von dem radial inneren Raum der Felge bis zu der radial inneren Oberfläche des Kolbens geleitet wird, wobei das Öffnen des Schiebers (1, 21, 31) durch die Verlagerung des Kolbens (4, 24, 34) in dem radial äußeren Raum der Felge (2, 22, 32) erhalten wird, **dadurch gekennzeichnet, dass** die von dem radial inneren Raum der Felge (2, 22, 32) bis zu der radial inneren Oberfläche des Kolbens (4, 24, 34) geleitete Luft einen Druck besitzt, der kleiner oder gleich jenem der montierten Anordnung ist.

2. Entleerungsschieber (1, 21, 31) nach Anspruch 1, **dadurch gekennzeichnet, dass** das Verhältnis der Steueroberfläche zu der radial äußeren Oberfläche des Kolbens (4, 24, 34) größer oder gleich 110 % ist.

3. Entleerungsschieber (1, 21, 31) nach einem der Ansprüche 1 oder 2, **dadurch gekennzeichnet, dass** die Steuerkraft durch eine mechanische und/oder hydraulische und/oder elektrische Vorrichtung erhöht wird.

4. Entleerungsschieber (1, 21) nach einem der vorhergehenden Ansprüche, **dadurch gekennzeichnet, dass** der Schieber (1, 21) in der geöffneten Position einen ringförmigen Evakuierungsabschnitt (14, 214) innerhalb des radial äußeren Raums der Felge (2, 22) in dem Luftreifenhohlraum erzeugt.

5. Entleerungsschieber (1, 21, 31) nach einem der vorhergehenden Ansprüche, **dadurch gekennzeichnet, dass** er die Luft in dem radial inneren Raum der Felge (2, 22, 32) durch wenigstens eine Öffnung (15, 215, 315) freigibt.

6. Entleerungsschieber (1, 21, 31) nach Anspruch 5, **dadurch gekennzeichnet, dass** die Öffnung (15, 215, 315) wenigstens eine charakteristische Abmessung kleiner als 10 mm hat.

7. Entleerungsschieber (21, 31) nach einem der vorhergehenden Ansprüche, **dadurch gekennzeichnet, dass** er ein Steuersystem (210, 211, 212, 213; 310, 311, 312, 313) aufweist, um den Kolben (24, 34) in die Entleerungsposition zu verlagern, sobald der Druck des Luftreifens einen Druckschwellenwert übersteigt.

8. Entleerungsschieber (21, 31) nach Anspruch 7, der ein komprimierbares Mittel (26, 36) umfasst, das die normalerweise geschlossene Position sicherstellt,
**dadurch gekennzeichnet, dass** er ein Steuersystem (210, 211; 310, 311) des passiven Typs umfasst und dass der Druck des Luftreifens den Schieber (21, 31) geöffnet hält, bis ein durch das komprimierbare Mittel (26, 36) definierter Druck erreicht ist.

9. Entleerungsschieber (21, 31) nach Anspruch 7 oder 8, **dadurch gekennzeichnet, dass** er ein Steuersystem (212, 213; 312, 313) des aktiven Typs umfasst und dass der Druck des Luftreifens den Schieber (21, 31) über einen Befehl einer Bedienungsperson geöffnet hält.

10. Entleerungsschieber (1, 21, 31) nach einem der vorhergehenden Ansprüche für eine montierte Anordnung für ein Kraftfahrzeug des Typs Muldenkipper.

11. Verfahren zum Ablassen von Luft aus einer montierten Anordnung, die aus einem Rad, das eine Felge (2, 22, 32) umfasst, und aus einem Fahrzeugluftreifen gebildet ist, durch einen Entleerungsschieber (1, 21, 31), der einen der Felge zugeordneten Körper (3, 23, 33) und einen in Bezug auf den Körper zwischen einer geschlossenen Position und einer Entleerungsposition beweglichen Kolben (4, 24, 34) umfasst, wobei der Schieber normalerweise geschlossen ist, wobei der Schieber durch die Wirkung einer Steuerkraft geöffnet wird, die von dem radial inneren Raum der Felge ausgeübt wird und wenigstens teilweise durch die komprimierte Luft sichergestellt ist, die von dem radial inneren Raum der Felge bis zu der radial inneren Oberfläche des Kolbens geleitet wird, **dadurch gekennzeichnet, dass** die komprimierte Luft, die von dem radial inneren Raum der Felge (2, 22, 32) bis zu der radial inneren Oberfläche des Kolbens (4, 24, 34) geleitet wird, einen Druck besitzt, der kleiner oder gleich jenem der montierten Anordnung ist.
